Europäisches Patentamt

European Patent Office

Office européen des brevets

(19)

(11) Publication number: **0 633 527 A1**

# EUROPEAN PATENT APPLICATION

(21) Application number: 93305412.4

(22) Date of filing: 09.07.93

(51) Int. Cl.6: **G06F 11/00**

(43) Date of publication of application:
**11.01.95 Bulletin 95/02**

(84) Designated Contracting States:
**DE FR GB**

(71) Applicant: **HAMAMATSU PHOTONICS K.K.**
**1126-1 Ichino-cho**
**Hamamatsu-shi**
**Shizuoka-ken (JP)**

(72) Inventor: **Delpy, D.T.c/o Univ. College London,**
**Dept. Med.Phy**
**and Bio-Eng.,**
**1st floor,**
**Shropshire House**
**11/20 Capper Street,**
**London WC1E 6JA (GB)**
Inventor: **Van der Zee, P., c/o Univ. Coll.**
**London, Dept. Med**
**Phys. & Bio-Eng.,**

**1st floor, Shropshire House**
**11/20 Capper Street,**
**London WC1E 6JA (GB)**
Inventor: **Cope, Mark, c/o Univ. College**
**London, Dep. Med.**
**Phys. & Bio-Eng.,**
**1st floor, Shropshire House**
**11/20 Capper Street,**
**London WC1E 6JA (GB)**
Inventor: **Arridge, Simon R., c/o Univ. College**
**London**
**Dept. Computer Science,**
**Gower Street**
**London WC1 (GB)**

(74) Representative: **Rackham, Stephen Neil et al**
**GILL JENNINGS & EVERY,**
**Broadgate House,**
**7 Eldon Street**
**London EC2M 7LH (GB)**

(54) Optical computer tomograph.

(57) To reconstruct a spatial distribution of absorption coefficient of an object by an optical computer tomograph, a predicted value $F(\mu_k)$ of a transilluminated light predicted for the k-th presumed image $\mu_k$ is computed using a predetermined prediction operator F, wherein k is an integer. On the basis of a detection value **X** at a light detection optical fiber and the predicted value $F(\mu_k)$, a difference $\{X - F(\mu_k)\}$ is computed wherein when the difference $\{X - F(\mu_k)\}$ falls within a predetermined range, the k-th presumed image $\mu_k$ is determined as a real absorption in the object. For the initial computation, a first presumed image is determined based on the real measurement value. The determination is made under an assumption that the object is homogeneous in terms of optical absorption coefficient and optical scattering coefficient. The degrees of the optical absorption and scattering coefficients are determined based on characterizations of a time-dependent photo density curve obtained as the real measurement value.

FIG. 3

PHOTON
DENSITY

MEASUREMENT

TIME

t

EP 0 633 527 A1

The present invention relates generally to an optical computer tomograph for measuring spatial distributions of optical absorption/scattering coefficients in an object to be probed.

In general, in diagnosing the function of a body organ, such as the cerebral tissues, the fundamental and important parameters to measure are the oxygen quantity in the body organ and the organ's utilization of oxygen. Supplying body organs with a sufficient quantity of oxygen is indispensable for the growth ability of new-born infants. If the supply of oxygen is insufficient, the probability that the new-born infant will die is high. Even if the newborn infant lives, serious problems in the body organs may remain as a sequel. The insufficiency of oxygen affects every body organ, but especially causes a serious damage in the cerebral tissues.

To quickly and readily measure a quantity of oxygen supplied to body organs, such as brain, a diagnostic apparatus using near infra-red spectroscopy technique has been developed as disclosed, for example, in U.S. Patent No. 4,281,645 issued August 4, 1981. This apparatus allows safe continuous monitoring of changes in blood and tissue oxygenation on an intact organ. This is made possible by observing spectral changes in the tissues caused by oxygenated haemoglobin, deoxygenated haemoglobin and cytochrome.

The absorption spectra of near infrared light (700 to 1300 nm), $\alpha Hb_2$ and $\alpha Hb$ by oxyhaemoglobin ($HbO_2$) and deoxyhaemoglobin (Hb), respectively, are different from each other. The absorption spectra of $\alpha CyO_2$ and $\alpha Cy$ by oxidized cytochrome a, $a_3$ (Cy), respectively, are different from each other. This diagnostic apparatus utilizes the above-described absorption spectra of near infrared light. Four near infrared light rays with different wavelengths, $\lambda 1$, $\lambda 2$, $\lambda 3$ and $\lambda 4$ (e.g. 775nm, 800nm, 825nm, and 850nm) are applied to one side of the patient's head with a time-sharing method and the transmission light rays from the opposite side of the head are in turn detected. By processing these four detected light rays with the prescribed calculation program, the density change of oxyhaemoglobin ($HbO_2$), deoxyhaemoglobin (Hb), oxidized cytochrome a, $a_3$ ($CyO_2$) and reduced cytochrome a, $a_3$ (Cy) are calculated. These parameters, in turn, determine the change of cerebral oxygen quantity.

Another devices using near infra-red spectroscopy technique have been proposed as disclosed in Japanese Laid-Open Patent Publication No. 63-275323 or an article entitled "A system for long term measurement of cerebral blood and tissue oxygenation in newborn infants by infrared illumination", Med. Biol. Eng. & Comp., 26, pp 289-294 by Cope M. and Delpy D.T.

As a further development of the near infra-red spectroscopy technique, an optical computer tomograph (optical CT) has recently been proposed to observe an oxygen distribution in brain, rather than to simply measure the oxygen quantity in the cerebral tissue. In such an optical CT, a spatial distribution of an optical absorption coefficient is reconstructed using the near infra-red (NIR) rays and an oxygen distribution is obtained upon computation of the measured results. However, unlike X-ray computer tomograph (X-ray CT), magnetic resonance imaging (MRI) apparatus, or nuclear magnetic resonance computer tomograph (NMR CT), there is a difficulty in reconstructing the oxygen distribution image with the optical CT because of high degree of light scattering in the tissue. The publication entitled "Reconstruction methods for infra-red absorption imaging" by S.R. Arridge et al seeks a solution to this problem.

Briefly, to reconstruct a spatial distribution of absorption coefficient with a conventional optical CT, a predicted value $F(\mu_k)$ of a transilluminated light predicted for the k-th presumed image $\mu_k$ is computed using a predetermined prediction operator F, wherein k is an integer. Then, on the basis of a set of measurements at N output sites for N input distributions, which are represented by a single vector **X**, and the predicted value $F(\mu_k)$, a difference $\{$**X** $-F(\mu_k)\}$ is computed wherein when the difference $\{$**X** $- F(\mu_k)\}$ falls within a predetermined range, the k-th presumed image $\mu_k$ is determined as a real absorption image. When the difference $\{$**X** $- F(\mu_k)\}$ is out of the predetermined range, then an estimated value of an error $\Delta\mu_k$ involved in the k-th presumed image $\mu_k$ is computed through a computation of $\Delta\mu_k = A^{-1}[$**X** $- F(\mu_k)]$ wherein $A^{-1}$ is an inverse operator of an operator A used to compute a perturbed value $A(\alpha)$ of the predicted value $F(\mu_k)$ resulting from a perturbation $\alpha$ of the k-th presumed image $\mu_k$. Further, addition of $\mu_k + \Delta\mu_k$ is computed and the resultant value $\Delta_{k+1}$ is fed back to the initial computation as a (k + 1)-th presumed image $\mu_{k+1}$.

In the method of reconstructing the spatial distribution of the optical absorption coefficient, an initial predicted value $F(\mu_1)$ predicted on the basis of an initial presumed image $\mu_1$ must be given for initial computation. The initial image is presumed to be homogeneous in both absorption coefficient $\mu_{a1}$ and scattering coefficient $\mu_{s1}$, and these coefficients are determined in accordance with data proposed in medical papers or obtained through experiments with animals.

The above-described error correction of the presumed image is implemented according to perturbation theorem wherein the error is assumed to be smaller than the average of the actualabsorption/scattering coefficient. Therefore, if the predicted coefficients differ greatly from the actual values inherent in the object to be imaged, the final result may not be obtained as the operation loop does not converge, otherwise the data obtained may be in error even if the operation loop converges.

As described, the absorption/scattering coefficient used for the initial computation is not specific to the individual object to be imaged but common to all the objects falling within the same category, hence accurate reconstruction of the image is not assured.

In accordance with the present invention, there is provided an optical computer tomograph which comprises light applying means for applying light onto an object, detecting means for detecting light emerging from a plurality of points of the object and outputting an actual measurement value, first operating means having an input, for computing a predicted value of light which is predicted to be output from the detecting means when data regarding a presumed optical spatial distribution representative of a presumed image of the object is applied to the input of the first operating means, second operating means having a first input applied with the actual measurement value and a second input applied with the predicted value, for computing a difference between the actual measurement value and the predicted value, correcting an error of the presumed image based on the difference therebetween, and applying corrected data representative of a corrected presumed image to the input of the first operating means so that a corrected predicted value of light is computed by the first operating means based on the corrected data, wherein when the difference between the actual measurement value and the corrected predicted value falls within a predetermined range, the corrected presumed image is determined as being a real image of the object, and initial data determining means for determining data regarding a presumed optical spatial distribution to be initially applied to the input of the first operating means based on the actual measurement value output from the detecting means.

Preferably, the light applying means comprises means for applying impulse light onto the object, and the detecting means comprises a streak camera outputting time-dependent photon density curve as the actual measurement value.

The initial data determining means determines the data under an assumption that the object is homogeneous in terms of optical absorption coefficient and optical scattering coefficient. The degrees of the optical absorption coefficient and the optical scattering coefficient are determined based on characterizations of the time-dependent photo density curve output from the streak camera. The optical absorption coefficient and the optical scattering coefficient of the data determined by the initial data determining means are determined if the time-dependent photon density curve output from the streak camera best fits a given curve whose optical absorption coefficient and optical scattering coefficient are known.

The particular features and advantages of the invention as well as other objects will become apparent from the following description taken in connection with the accompanying drawings, in which:

Fig. 1(A) is a diagram showing an object to be imaged, and Fig. 1(B) is a graphical representation showing a time-dependent photon density detected at a location when an input source distribution is applied;

Fig. 2(A) is a diagram showing an object presumed to be homogeneous in both absorption coefficient and scattering coefficient, and Fig. 2-(B) is a graphical representation showing a time-dependent photon density detected at a location when an input source distribution is applied;

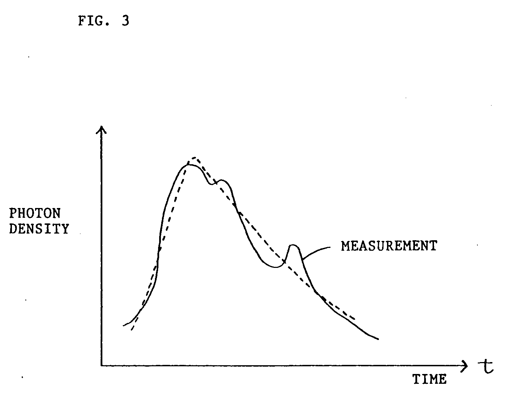

Fig. 3 is a graph representation illustrating selection of initial values for the absorption and scattering coefficients;

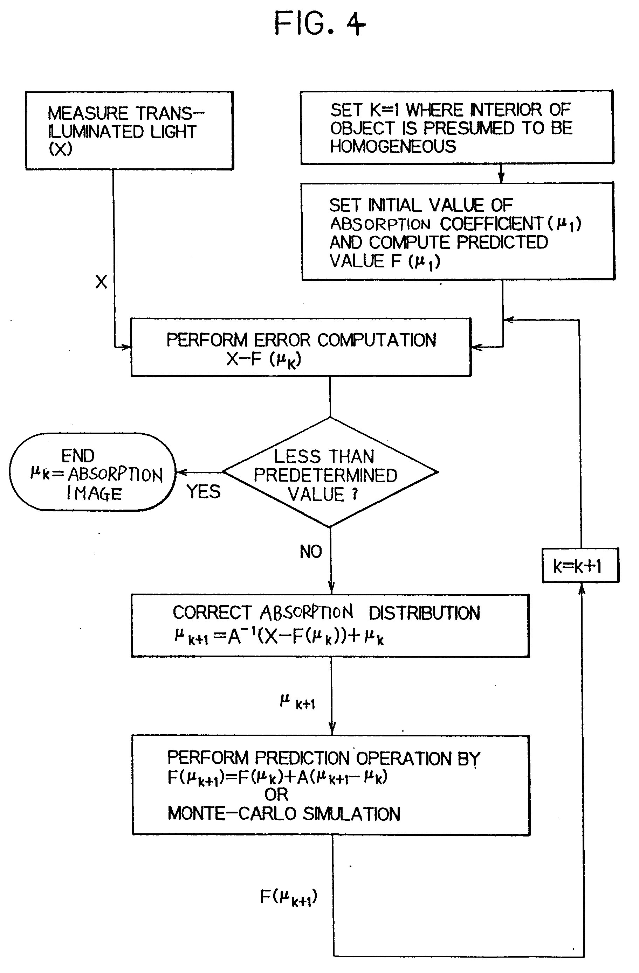

Fig. 4 is a flow chart illustrating operational sequence for reconstructing an absorption image of an object of interest according to the present invention;

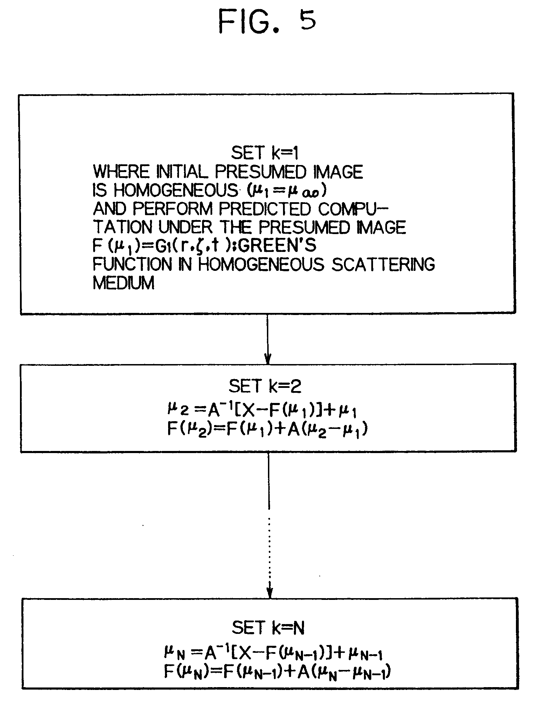

Fig. 5 is a flow chart illustrating operational sequence executed by the present invention; and

Fig. 6 is a flow chart illustrating operational sequence executed according to a modification of the present invention.

A preferred embodiment of the present invention will now be described with reference to the accompanying drawings. The preferred embodiment of the invention is directed to reconstructing a spatial distribution of an optical absorption coefficient of an object. However, the invention is also applicable to reconstruction of a spatial distribution of an optical scattering coefficient as will be readily apparent from the following description.

To reconstruct a spatial distribution of an optical absorption coefficient, 2N-number (8 in the embodiment) optical fibers are attached to the object to be imaged in which N-number (4 in the embodiment) optical fibers are used for applying light into the object and the remaining N-number optical fibers are used to detect transilluminated light. The flux intensity of light arising from a specific source distribution is detected at the N-number detecting fibers. Therefore, a set of measurements $\mathbf{X}$ including $N^2$-number measurements represented by $X_{kj}$ ($k, j = 1$ through N) are obtained.

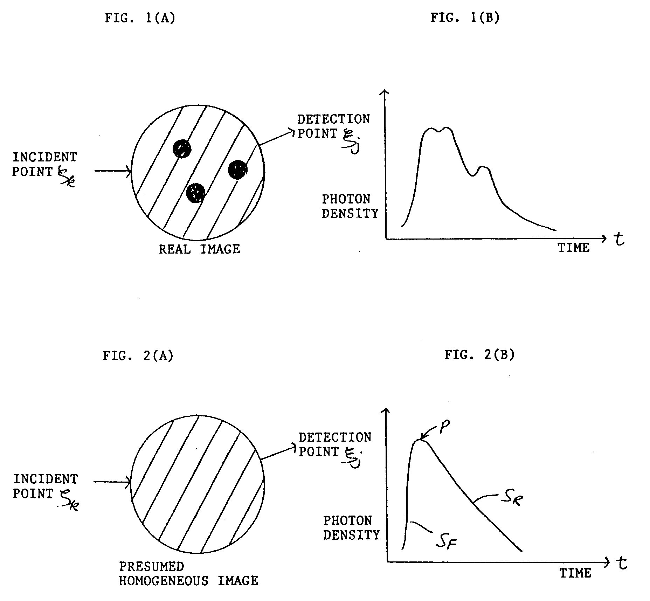

At the initial stage ($k = 1$) of the image reconstruction algorithm, the object to be imaged is assumed to be homogeneous in both optical absorption coefficient $\mu_a$ and optical scattering coefficient $\mu_s$. Irradiating impulse light onto the object, a time-dependent photon density curve as shown in Fig. 2(B) is obtained through a streak camera. This photon density curve is characterized by parameters including a slope of rising curve segment $S_F$, a peak point P and a slope of descendent curve segment $S_R$. These parameters are determined depending on the optical absorption coefficient $\mu_a$ and the optical scattering coefficient $\mu_s$. A relationship between the absorption and scattering coefficients $\mu_a$ and $\mu_s$ and the parameters of the photon density curve, $S_R$, $S_F$ and P, can be predicted from a computer-controlled Monte-Carlo simulation or from actual measurement using a phantom with known $\mu_a$ and $\mu_s$.

A time-dependent photon density curve plotted according to actual measurement is shown in Fig. 1(B). As can be seen in the figure, the curve does not smoothly change due to the presence of light absorbing or light scattering material in the object to be imaged. In this embodiment, the initial image is determined based on the data obtained through the actual measurement. More specifically, a predicted time-dependent photon density curve which is best fit to the curve obtained through the actual measurement is selected and used as the initial values for the absorption and scattering coefficients $\mu_a$ and $\mu_s$.

In the actual measurements, $F(\mu_1)$ is given with respect to the incident point $\zeta_k$ and the detection point $\zeta_j$. Here, $F(\mu_1)$ is rewritten as $F_{kj}(\mu_1)$ in relation to the associated incident point $\zeta_k$ and the detection point $\zeta_j$. The first error computation is carried out by comparing $X_{kj}$ with $F_{kj}(\mu_1)$.

Next, for the k-th presumed image $\mu_k$, a correction component $\Delta\mu_k = A^{-1}[X-F(\mu_k)]$ to be added to $\mu_k$ is obtained based on the difference between the measured value $\mathbf{X}$ and the predicted value F-$(\mu_k)$ where $A^{-1}$ is an inverse operator of an operator A. The operator A represents a change of predicted value of the detected light resulting from small perturbation $\Delta\mu_k$ of the presumed absorption image, i.e.,

$$A(\Delta\mu_k) \equiv F(\mu_k + \Delta\mu_k) - F(\mu_k) \qquad (3)$$

Specifically, considering a diffusion equation which gives a photon density $\Phi$ with no perturbation, i.e.,

$$-\mathbf{V}(x(\mu_s)\mathbf{V}\Phi) + \mu_a c\Phi + \partial\Phi/\partial t = q \qquad (4)$$

the photon density $\Phi$ is represented by the Green's function $G_{\mu s}(q) = \Phi$ where when $k = 1$, $G_{\mu 1}(\delta(\zeta,0))- = g_1$.

Next, applying a perturbation $\beta$ of the absorption image $\mu_a$ (i.e., $\mu_a \rightarrow \mu_a + \beta$) to equation (4), there would be corresponding perturbations $\nu$ in the scattering coefficient $x$ (i.e., $x \rightarrow x + \nu$) and $\eta$ in the photon density $\Phi$ (i.e., $\Phi \rightarrow \Phi + \eta$) where there is a relationship of $\nu = (\partial x/\partial\mu_s)\Delta\mu_s = (\partial x/\partial\mu_{s-})\beta$. In this case, $\eta$ is given by:

$$\eta = G_{\mu s}[\mathbf{V}(\nu\mathbf{V}\Phi)] \qquad (5)$$

Specifically, the perturbation $\eta$ of the photon density in the interior of the object resulting from the perturbation $\beta$ of the absorption image $\mu_a$ can be computed as it is dependent on parameters of $\Phi$, $x$ and $\mu_a$ with no perturbations, the Green's function $G_{\mu s}$ with no perturbation, and the perturbation $\beta$. On the other hand, the perturbation of the detected light is given by $-x\mathbf{V}_n\eta$ which corresponds to the operator A, so that the following equation is obtained.

$$A(\beta) = -x\mathbf{V}_n G_{\mu s}[\mathbf{V}\{(\partial x/\partial\mu_a)\beta \cdot \mathbf{V}\Phi)\}] \qquad (6)$$

Here, $\mu_a$ corresponds to $\mu_k$ and $\beta$ to $\Delta\mu_k$, so equation (6) can be rewritten as follows:

$$A(\mu_k) = -x\mathbf{V}_n G_{\mu k}[\mathbf{V}\{(\partial x/\partial\mu_k)\beta \cdot \mathbf{V}\Phi\}] \qquad (7)$$

Equation (7) gives perturbation of the detected light at the surface of the object for the perturbation of the presumed image from $\mu_k$ to $\mu_k + \Delta\mu_k$.

The goal to be attained is to obtain a correction value $\Delta\mu_k$ for the presumed image $\mu_k$ from a difference between the measured detection light X and the predicted value $F(\mu_k)$ of the light to be detected for the k-th presumed image $\mu_k$. Based on equation (3), an approximation can be made so that

$$A(\Delta\mu_k) \approx X - F(\mu_k) \qquad (8)$$

Accuracy improves as $F(\mu_k)$ approaches $\mathbf{X}$ in the above approximation. Therefore, upon computing a correction value $\Delta\mu_k = A^{-1}\{X - F(\mu_k)\}$, a predicted value of $F(\mu_{k+1})$ for the (k+1)-th presumed image given by $\mu_{k+1} = \mu_k + \Delta\mu_k$ is computed to further approach the predicted value of $F(\mu_{k+1})$ toward $\mathbf{X}$. The above-described loop is repeatedly carried out, whereby $F(\mu_k)$ is in access of $\mathbf{X}$ given an appropriate noise inducing circumstance. When X - $F(\mu_k)$ falls below a predetermined level, the $\mu_k$ at this instant is determined as a reconstructed absorption image.

While in the above description, only the absorption image is reconstructed, it is preferable that a scattering image be reconstructed together with the absorption image.

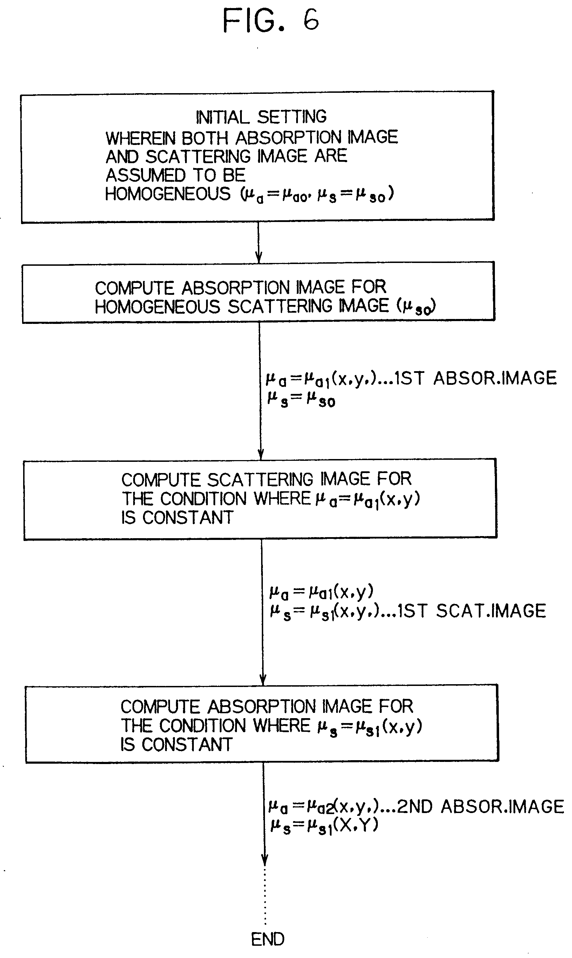

Fig. 6 shows a modification of the present invention wherein the absorption image and the scattering image are obtained independently of each other while performing processing for the absorption image and the scattering image alternately. According to such a processing, both the absorption and scattering images close to the real images can be reconstructed as the computations are repeatedly carried out in an appropriate noise circumstance.

Further, data regarding the spatial distribution of the absorption coefficient can be obtained together with the spatial distribution of the scattering coefficient. In this case, the accuracy of the former data is greatly improved as compared with the data obtained by the conventional device wherein the spatial distribution of the scattering coefficient is assumed to be constant in obtaining the spatial distribution of the absorption coefficients.

**Claims**

1.  An optical computer tomograph comprising:

    light applying means for applying light onto an object;

    detecting means for detecting light emerging from a plurality of points of the object and outputting an actual measurement value;

    first operating means having an input, for computing a predicted value of light which is predicted to be output from said detecting means when data regarding a presumed optical spatial distribution representative of a presumed image of the object is applied to the input of said first operating means; and

    second operating means having a first input applied with the actual measurement value and a second input applied with the predicted value, for computing a difference between the actual measurement value and the predicted value, correcting an error of the presumed image based on the difference therebetween, and applying corrected data representative of a corrected presumed image to the input of said first operating means so that a corrected predicted value of light is computed by said first operating means based on the corrected data, wherein when the difference between the actual measurement value and the corrected predicted value falls within a predetermined range, the corrected presumed image is determined as being a real image of the object,

    characterized in that the optical computer tomograph further comprises initial data determining means for determining data regarding a presumed optical spatial distribution to be initially applied to the input of said first operating means based on the actual measurement value output from said detecting means.

2.  The optical computer tomograph according to claim 1, wherein said light applying means comprises means for applying impulse light onto the object.

3.  The optical computer tomograph according to claim 1 or 2, wherein said detecting means comprises a streak camera outputting time-dependent photon density curve as the actual measurement value.

4.  The optical computer tomograph according to claim 3, wherein said initial data determining means determines the data under an assumption that the object is homogeneous in terms of optical absorption coefficient and optical scattering coefficient.

5.  The optical computer tomograph according to claim 4, wherein degrees of the optical absorption coefficient and the optical scattering coefficient are determined based on characterizations of the time-dependent photo density curve output from the streak camera.

6.  The optical computer tomograph according to claim 5, wherein the optical absorption coefficient and the optical scattering coefficient of the data determined by said initial data determining means are determined if the time-dependent photon density curve output from the streak camera best fits a given curve whose optical absorption coefficient and optical scattering coefficient are known.

FIG. 1(A)

INCIDENT POINT $\xi_k$

DETECTION POINT $\xi_j$

REAL IMAGE

FIG. 1(B)

PHOTON DENSITY

TIME $t$

FIG. 2(A)

INCIDENT POINT $\xi_k$

DETECTION POINT $\xi_j$

PRESUMED HOMOGENEOUS IMAGE

FIG. 2(B)

$P$

PHOTON DENSITY

$S_R$

$S_F$

TIME $t$

FIG. 3

PHOTON
DENSITY

MEASUREMENT

TIME  $t$

# FIG. 4

```
┌─────────────────────┐        ┌─────────────────────────────┐
│ MEASURE TRANS-      │        │ SET K=1 WHERE INTERIOR OF   │
│ ILUMINATED LIGHT    │        │ OBJECT IS PRESUMED TO BE    │
│ (X)                 │        │ HOMOGENEOUS                 │
└─────────────────────┘        └─────────────────────────────┘
                                            │
                               ┌─────────────────────────────┐
                               │ SET INITIAL VALUE OF        │
                               │ ABSORPTION COEFFICIENT (μ₁) │
                               │ AND COMPUTE PREDICTED       │
                               │ VALUE F (μ₁)                │
                               └─────────────────────────────┘
```

MEASURE TRANS- ILUMINATED LIGHT (X)

SET K=1 WHERE INTERIOR OF OBJECT IS PRESUMED TO BE HOMOGENEOUS

SET INITIAL VALUE OF ABSORPTION COEFFICIENT ($\mu_1$) AND COMPUTE PREDICTED VALUE $F(\mu_1)$

$X$

PERFORM ERROR COMPUTATION $X - F(\mu_k)$

END $\mu_k$=ABSORPTION IMAGE

LESS THAN PREDETERMINED VALUE ?

YES

NO

$k=k+1$

CORRECT ABSORPTION DISTRIBUTION $\mu_{k+1} = A^{-1}(X - F(\mu_k)) + \mu_k$

$\mu_{k+1}$

PERFORM PREDICTION OPERATION BY $F(\mu_{k+1}) = F(\mu_k) + A(\mu_{k+1} - \mu_k)$ OR MONTE-CARLO SIMULATION

$F(\mu_{k+1})$

# FIG. 5

SET k=1
WHERE INITIAL PRESUMED IMAGE
IS HOMOGENEOUS $(\mu_1 = \mu_{ao})$
AND PERFORM PREDICTED COMPU-
TATION UNDER THE PRESUMED IMAGE
$F(\mu_1) = G_1(r, \zeta, t)$:GREEN'S
FUNCTION IN HOMOGENEOUS SCATTERING
MEDIUM

SET k=2
$\mu_2 = A^{-1}[X - F(\mu_1)] + \mu_1$
$F(\mu_2) = F(\mu_1) + A(\mu_2 - \mu_1)$

SET k=N
$\mu_N = A^{-1}[X - F(\mu_{N-1})] + \mu_{N-1}$
$F(\mu_N) = F(\mu_{N-1}) + A(\mu_N - \mu_{N-1})$

# FIG. 6

INITIAL SETTING
WHEREIN BOTH ABSORPTION IMAGE
AND SCATTERING IMAGE ARE
ASSUMED TO BE
HOMOGENEOUS $(\mu_a = \mu_{ao}, \mu_s = \mu_{so})$

$\downarrow$

COMPUTE ABSORPTION IMAGE FOR
HOMOGENEOUS SCATTERING IMAGE $(\mu_{so})$

$\mu_a = \mu_{a1}(x,y,)...$1ST ABSOR.IMAGE
$\mu_s = \mu_{so}$

$\downarrow$

COMPUTE SCATTERING IMAGE FOR
THE CONDITION WHERE $\mu_a = \mu_{a1}(x,y)$
IS CONSTANT

$\mu_a = \mu_{a1}(x,y)$
$\mu_s = \mu_{s1}(x,y,)...$1ST SCAT.IMAGE

$\downarrow$

COMPUTE ABSORPTION IMAGE FOR
THE CONDITION WHERE $\mu_s = \mu_{s1}(x,y)$
IS CONSTANT

$\mu_a = \mu_{a2}(x,y,)...$2ND ABSOR.IMAGE
$\mu_s = \mu_{s1}(X,Y)$

$\downarrow$
$\vdots$

END

10

European Patent Office

**EUROPEAN SEARCH REPORT**

Application Number

EP 93 30 5412

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO-A-91 07655 (SINGER IMAGING INC) 30 May 1991 | 1 | G06F11/00 |
| Y | | 2-6 | |
| | * page 3, line 7 - page 4, line 17 *<br>* page 6, line 24 - line 27 *<br>* claim 1; figure 5 *<br>--- | | |
| Y | US-A-5 142 372 (ALFANO ET AL.) 25 August 1992<br>* column 2, line 6 - line 43 *<br>----- | 2-6 | |
| | | | **TECHNICAL FIELDS SEARCHED (Int.Cl.6)**<br><br>G06F |

The present search report has been drawn up for all claims

| Place of search | Date of completion of the search | Examiner |
|---|---|---|
| THE HAGUE | 14 January 1994 | PEREZ MOLINA, E |

EPO FORM 1503 03.82 (P04C01)